(19) Europäisches Patentamt
European Patent Office
Office européen des brevets

(11) **EP 2 668 557 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(21) Anmeldenummer: **11788384.3**

(22) Anmeldetag: **28.11.2011**

(51) Int Cl.:
*G06F 3/044* (2006.01)     *G06F 3/048* (2013.01)
*G06F 3/041* (2006.01)     *G06T 5/00* (2006.01)
*B60K 35/00* (2006.01)

(86) Internationale Anmeldenummer:
**PCT/EP2011/005961**

(87) Internationale Veröffentlichungsnummer:
**WO 2012/100795 (02.08.2012 Gazette 2012/31)**

(54) **VERFAHREN ZUM BEDIENEN EINES MATRIX-TOUCHSCREENS**

METHOD FOR OPERATING A MATRIX-TOUCHSCREEN

PROCÉDÉ POUR COMMANDER UN ÉCRAN TACTILE À MATRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2011 DE 102011009710**

(43) Veröffentlichungstag der Anmeldung:
**04.12.2013 Patentblatt 2013/49**

(73) Patentinhaber: **Volkswagen Aktiengesellschaft 38440 Wolfsburg (DE)**

(72) Erfinder:
• **CZELNIK, Mark, Peter 38440 Wolfsburg (DE)**
• **BENDEWALD, Lennart 38442 Wolfsburg (DE)**

(56) Entgegenhaltungen:
WO-A1-2009/154596     WO-A2-2005/114369
US-A1- 2009 284 495     US-B1- 6 606 420
US-B1- 7 348 991

EP 2 668 557 B1

## Beschreibung

Die Erfindung betrifft ein Verfahren zum Betrieb eines Kraftfahrzeuges mit einem insbesondere kapazitiven Matrix-Touchscreen, wobei bei Berührung des Matrix-Touchscreens im Bereich eines Matrixelementes ein dem Matrixelement zugeordneter Signalpegel erzeugt wird.

Ein Touchscreen ist z. B. aus der DE 201 02 197 U1 bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Die DE 602 20 933 T2 offenbart ein Verfahren zum Unterscheiden zwischen zwei oder mehr zeitlich überlappten Berührungsangaben in ein Berührungsbildschirmsystem. Die US 2006/0161871 A1 offenbart eine Ein-/Ausgabeplattform, die eine Ein-/Ausgabeoberfläche mit einem oder mehreren Ein-/Ausgabegeräten aufweist. Darüber hinaus ist ein Annäherungssystem zur Erkennung, ob sich ein Finger in der nahen Umgebung der Ein-/Ausgabeoberfläche befindet, ohne diese zu berühren, vorgesehen.

Die EP 1 517 228 A2 offenbart ein Verfahren zur Gestenerkennung, wobei ein Bild auf einer Berührungsoberfläche dargestellt wird, wobei eine Berührung dieser Berührfläche detektiert wird und ermittelt wird, ob Mehrfachberührungen einer Geste entsprechen, wobei das dargestellte Bild verändert wird, wenn eine bestimmte Geste erkannt wird.

Die US-Patentanmeldung 11/928,629 vom 30.10.2007 beschreibt ein Kraftfahrzeug mit einem in einem Fahrgastraum des Kraftfahrzeuges angeordneten Touchscreen zur Ausgabe eines von einer Berührung des Touchscreens abhängigen Ausgangssignals und mit einer Steuerungsanordnung zur Auswertung des Ausgangssignals im Sinne einer Handschriftenerkennung zur Erkennung eines Textes einer auf ein Alphabet gestützten Sprache, einer auf eine Silbenschrift gestützten Sprache und/oder einer auf Schriftzeichen gestützten Sprache.

Die US 7 348 991 B1 offenbart ein Verfahren, das der Verschlechterung von Text auf Bildschirmen entgegenwirken soll.

Die US 6 606 420 B1 offenbart ein Verfahren zur Hell-Dunkel-Regelung in digitalen Bildern.

Die WO 2009/154596 A1 offenbart ein Video-Verarbeitungssystem, das einen Eingangsstrom von Frames empfängt und einen Strom verbesserter Frames für die Speicherung, Übertragung und/oder Wiedergabe erzeugt.

Die WO 2005/114369 A2 offenbart einen Multipoint Touchscreen mit Signalverarbeitung.

Die WO 2009/007704 A1 offenbart ein Touchpanel mit einer Mehrzahl von Sensorelementen, die über die Fläche des Touchpanels verteilt sind, wobei ein Kapazitätsmesskreis mit den Sensorelementen verbunden ist, um Kapazitätssignale zu erhalten. Basierend auf diesen Kapazitätssignalen werden die Koordinaten von Berührungen des Touchpanels ermittelt.

Die US 2009/0284495 A1 offenbart einen matrixbasierten Touchscreen zur Erkennung von Mehrfachberührungen.

Die US 2008/0309629 A1 offenbart ein Verfahren zum Verarbeiten von Gebieten, die beim Berühren eines Touchscreens basierend auf einer Mehrzahl von Pixeln identifiziert werden, die Berührungswerte eines Touch-Sensor-Panels aufweisen, wobei Pixel entfernt werden, die Berührungswerte aufweisen, die eine Nichtberührung indizieren. Nicht entfernte Pixel werden dagegen mit einem Wasserscheiden-Algorithmus verarbeitet.

Die US 2008/0158145 A1 offenbart ein Verfahren zum Verarbeiten von Werten eines Touchscreens (*touch sensor device*). Dabei wird ein Bild erzeugt, das zu Identifizierung einer Mehrzahl von Berührungsgebieten segmentiert wird.

Die US 2009/0095540 A1 offenbart ein Verfahren zum Klassifizieren eines Inputs für einen Multi-Touch sensitiven Digitizer. Dabei wird eine Mehrzahl von diskreten Regionen identifiziert und eine Beziehung zwischen zumindest zwei Regionen bestimmt.

Es ist Aufgabe der Erfindung, eine verbesserte Bedieneinrichtung anzugeben bzw. die Bedienung eines Kraftfahrzeuges, zu verbessern. Dabei ist insbesondere zu berücksichtigen, dass für ein Kraftfahrzeug eine besonders zuverlässige Bedienung erfolgen soll, ohne dass ein Bediener längere Zeit auf eine Bedieneinrichtung schauen muss. Es soll bei besonders kurzer Ausrichtung eines Blicks eines Bedieners auf eine Bedieneinrichtung eine besonders zuverlässige bzw. robuste Bedienung sichergestellt werden.

Vorgenannte Aufgabe wird durch ein Verfahren gemäß Anspruch 1 gelöst, wobei unter anderen vorgesehen ist, dass in Abhängigkeit gemäß Anspruch 1 abgewandelter Signalpegel zweier benachbarter Matrixelemente bestimmt wird, ob die beiden Matrixelemente im Rahmen einer gemeinsamen flächigen Berührung des Matrix-Touchscreens berührt werden.

Ein Matrixelement im Sinne der Erfindung ist insbesondere ein Pixel. Ein Matrix-Touchscreen im Sinne der Erfindung ist insbesondere ein in Spalten und Zeilen segmentierter Matrix-Touchscreen. Ein Matrix-Touchscreen im Sinne der Erfindung ist insbesondere ein Matrix-Touchscreen, dessen Matrixelemente bzw. Pixel je einer Zeile und je einer Spalte zugeordnet sind. Ein Matrix-Touchscreen im Sinne der Erfindung ist insbesondere ein Multitouchscreen zum Erkennen der Position von zumindest zwei gleichzeitig erfolgenden Berührungen des Multitouchscreens. Ein Ausführungsbeispiel für einen Matrix-Touchscreen im Sinne der Erfindung ist zum Beispiel das in der US 2009/0284495 A1 offenbarte *touch input system* bzw. der Touchsensor 110. Ein weiteres Ausführungsbeispiel für einen Matrix-Touchscreen im Sinne der Erfindung ist zum Beispiel das in der US 2008/309629 A1 offenbarte *touch sensor panel* 124. Ein Matrix-Touchscreen im Sinne der Erfindung ist in einem Kraftfahrzeug angeordnet. Ein Matrix-Touchscreen im Sinne der Erfindung dient der Bedienung der Funktion eines Kraftfahrzeuges. Eine Funktion eines Kraftfahrzeuges ist im Sinne der Erfindung insbesondere die Empfangsfrequenz eines Radios, die Lautstärke einer akustischen Ausgabe in dem Kraftfahrzeug, eine Klangeinstellung (Art und Balance), eine Wahl eines Kartenausschnitts, eine Titelwahl, eine Auswahl eines Zielortes und/oder eine Temperatureinstellung. Eine Funktion eines Kraftfahrzeuges im Sinne der Erfindung ist insbesondere eine Funktion, für die ein Sollwert aus einer Auswahl von, insbesondere kontinuierlichen, Werten getroffen werden soll. Eine Funktion eines Kraftfahrzeugs im Sinne der Erfindung ist insbesondere eine analog, insbesondere einer Skala folgend, einstellbare Funktion. In vorteilhafter Ausgestaltung der Erfindung umfasst die Funktion des Kraftfahrzeuges das Scrollen durch eine Liste. In weiterhin vorteilhafter Ausgestaltung der Erfindung umfasst die Funktion des Kraftfahrzeuges das Verschieben eines Kartenausschnitts. In weiterhin vorteilhafter Ausgestaltung der Erfindung umfasst die Funktion des Kraftfahrzeuges das Skalieren eines Kartenausschnitts. In weiterhin vorteilhafter Ausgestaltung der Erfindung umfasst die Funktion des Kraftfahrzeuges das Bewegen eines auf dem Display dargestellten Elementes.

Ein einem Matrixelement zugeordneter Signalpegel im Sinne der Erfindung ist insbesondere kein binärer Wert, sondern vielmehr ein analoger Wert oder ein digitalisierter Wert, der mehr als zwei Werte annehmen kann. Ein Signalpegel im Sinne der Erfindung ist insbesondere ein digitalisierter Wert einer analogen Ausgangsgröße eines Matrix-Touchscreens.

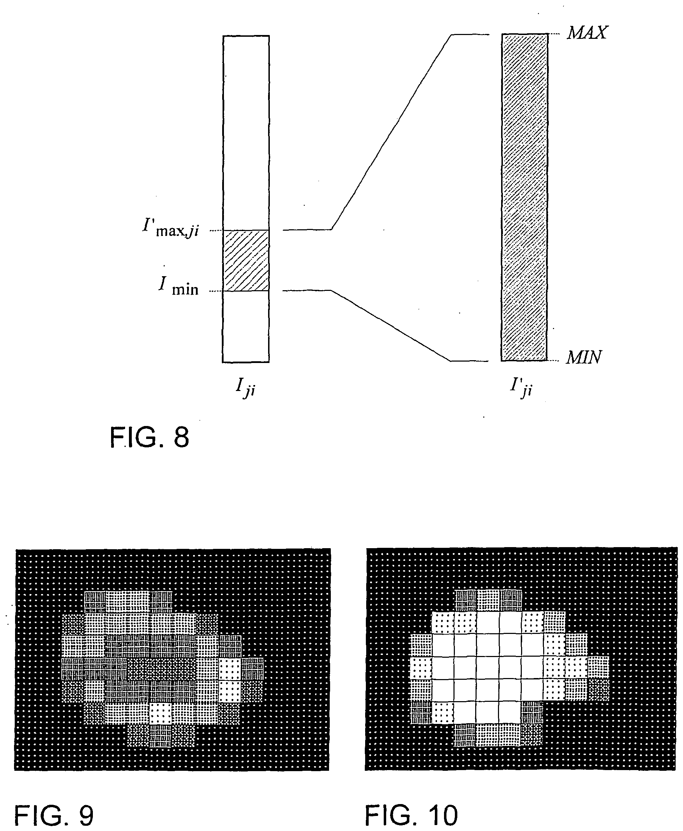

Beim Skalieren des Signalpegels ist insbesondere vorgesehen, dass der Bereich zwischen dem oberen Signalpegelgrenzwert und dem unteren Signalpegelgrenzwert auf einen Bereich zwischen null und maximal möglichem Wert des Signalpegels (maximalen Signalpegel) projiziert wird. Eine solche Projektion zeigt beispielhaft Fig. 8.

Einen geeigneten Algorithmus zur Bestimmung, ob die Matrixelemente im Rahmen einer gemeinsamen flächigen Berührung des Matrix-Touchscreens berührt werden, offenbart der Artikel "A Linear-Time Component-Labeling Algorithm Using Contour Tracing Technique", Fu Chang, Chun-Jen Chen, and Chi-Jen Lu, Institute of Information Science, Academia Sinica, 128 Academia Road, Section 2, Nankang, Taipei 115 Taiwan, www.iis.sinica.edu.tw/~fchang/paper/component_labeling_cviu.pdf. Das in diesem Artikel beschriebene Verfahren setzt Binärwerte voraus. Um diesen Algorithmus in Bezug auf die vorgenannten Signalpegel anwenden zu können, werden diese einer ersten Größe zugeteilt, wenn sie oberhalb eines bestimmten Grenzwertes liegen, und einer zweiten Größe zugeteilt, wenn sie nicht oberhalb dieses Grenzwertes liegen. Die auf diese Weise auf binäre Signale reduzierten Signalpegel werden dann mittels des vorgenannten Algorithmus verarbeitet, wobei vorteilhafter Weise lediglich von einer Vieremachbarschaft ausgegangen wird.

Es kann vorgesehen sein, dass vor der Bestimmung bzw. Erkennung, ob (zwei) Matrixelemente im Rahmen einer gemeinsamen flächigen Berührung des Matrix-Touchscreens berührt werden, durch Interpolation aus einem Matrixelement mehrere (insbesondere vier) Pseudo-Matrixelemente erzeugt werden, denen jeweils wieder ein (interpolierter) Signalpegel zugeordnet wird. Es kann vorgesehen sein, dass anschießend der einem Pseudo-Matrixelement zugeordnete Signalpegel derart abgewandelt wird, dass der Signalpegel,

- wenn dieser Signalpegel einen oberen Signalpegelgrenzwert überschreitet, insbesondere auf einem maximalen Signalpegel, erhöht wird,

- wenn dieser Signalpegel einen unteren Signalpegelgrenzwert unterschreitet, insbesondere auf einem minimalen Signalpegel, verringert wird, und

- wenn dieser Signalpegel den oberen Signalpegelgrenzwert unterschreitet aber einen unteren Signalpegelgrenzwert überschreitet, skaliert wird.

Soweit im Folgenden auf ein Matrixelement Bezug genommen wird, kann dies auch eine Bezugnahme auf ein Pseudo-Matrixelement sein. Soweit im Folgenden auf einen Signalpegel eines Matrixelementes Bezug genommen wird, kann dies auch eine Bezugnahme auf einen (durch Interpolation errechneten) Signalpegel eines Pseudo-Matrixelementes sein.

In weiterhin vorteilhafter Ausgestaltung der Erfindung wird in Abhängigkeit der abgewandelten Signalpegel eines Matrixelementes und (zumindest, insbesondere jedoch genau) vier diesem Matrixelement benachbarter Matrixelemente bestimmt, ob das Matrixelement und die benachbarten Matrixelemente im Rahmen einer gemeinsamen flächigen Berührung des Matrix-Touchscreens berührt werden.

In der Erfindung wird der obere Signalpegelgrenzwert für ein Matrixelement in Abhängigkeit der Summe der Signalpegel aller Matrixelemente der Zeile des Matrixelementes bestimmt. In der Erfindung wird der obere Signalpegelgrenzwert für ein Matrixelement in Abhängigkeit der Summe der Signalpegel aller Matrixelemente der Spalte des Matrixelementes bestimmt. Mehrere Matrixelemente einer Zeile oder einer Spalte im Sinne der Erfindung sind insbesondere eine feste bzw. vorbestimmte Anzahl von Matrixelementen bzw. Pixeln. Mehrere Matrixelemente einer Zeile oder einer Spalte im Sinne der Erfindung sind insbesondere eine Anzahl von Matrixelementen bzw. Pixeln, die unabhängig von der Berührung des Matrix-Touchscreens festgesetzt wird. Eine Zeile im Sinne der Erfindung ist insbesondere eine horizontale Anordnung von Matrixelementen bzw. Pixeln. Eine Spalte im Sinne der Erfindung ist insbesondere eine vertikale Anordnung von Matrixelementen bzw. Pixeln.

In weiterhin vorteilhafter Ausgestaltung der Erfindung wird die Summe der Signalpegel (im Wesentlichen) zu Null gesetzt, wenn sie einen Grenzwert unterschreitet. In weiterhin vorteilhafter Ausgestaltung der Erfindung wird die Summe der Signalpegel skaliert, wenn sie einen oder den Grenzwert überschreitet, wobei in weiterhin vorteilhafter Ausgestaltung der Erfindung die Summe der Signalpegel mit einem Skalierungsfaktor multipliziert wird, wenn sie einen oder den Grenzwert überschreitet.

In weiterhin vorteilhafter Ausgestaltung der Erfindung wird der Abstand einer erkannten flächigen Berührung des Matrix-Touchscreens in einem Abtastzeitpunkt zu einer erkannten flächigen Berührung des Matrix-Touchscreens in einem vorhergehenden Abtastzeitpunkt ermittelt, wobei vorteilhafterweise vorgesehen ist, dass in Abhängigkeit des ermittelten Abstandes bestimmt wird, ob die erkannten flächigen Berührungen Teil derselben berührenden Bewegung über den Matrix-Touchscreen sind. In weiterhin vorteilhafter Ausgestaltung der Erfindung werden die Abstände der erkannten flächigen Berührungen des Matrix-Touchscreens in einem Abtastzeitpunkt zu den erkannten flächigen Berührungen des Matrix-Touchscreens in einem vorhergehenden Abtastzeitpunkt ermittelt, wobei vorteilhafterweise vorgesehen ist, dass in Abhängigkeit der ermittelten Abstände bestimmt wird, ob die erkannten flächigen Berührungen Teil derselben berührenden Bewegung über den Matrix-Touchscreen sind.

Ein Abstand ist insbesondere vom Flächenschwerpunkt und/oder einem anderen die Mitte der Berührung definierenden bzw. beschreibenden Punkt zu ermitteln. Ein vorhergehender Abtastzeitpunkt im Sinne der Erfindung ist insbesondere der unmittelbar vorhergehende Abtastzeitpunkt. Wird zum Beispiel die Berührung eines Matrix-Touchscreens zum Abtastzeitpunkt i ermittelt, so ist der vorhergehende Abtastzeitpunkt insbesondere der Abtastzeitpunkt i - 1. Der Begriff des Abtastzeitpunkts im Sinne der Erfindung bezieht sich insbesondere auf die Digitalisierung bzw. die digitale Erfassung von Berührungen des Matrix-Touchscreens.

Eine berührende Bewegung über den Matrix-Touchscreen soll im Sinne der Erfindung insbesondere in eine Trajektorie übersetzt werden. Entsprechend einer solchen Trajektorie kann zum Beispiel ein grafisches Element auf einem Display verschoben werden oder ein Buchstabe, ein Schriftzeichen oder eine Zahl identifiziert werden.

In vorteilhafter Ausgestaltung der Erfindung werden Berührungen oder die Berührungen nicht als Teil derselben berührenden Bewegung über den Matrix-Touchscreen eingestuft, wenn der Abstand dieser Berührungen einen Grenzwert überschreitet.

In weiterhin vorteilhafter Ausgestaltung der Erfindung ist der Grenzwert abhängig von der Funktion, die mittels der berührenden Bewegung bedient werden soll. Eine Funktion ist im Sinne der Erfindung insbesondere eine Funktion eines Kraftfahrzeuges. Eine Funktion im Sinne der Erfindung wird insbesondere auf einem Display angezeigt.

In weiterhin vorteilhafter Ausgestaltung der Erfindung wird der Grenzwert gemäß der Formel

$$D_{\max} = i \cdot k \cdot \Delta t \cdot v_{\max}$$

bestimmt, wobei $D_{\max}$ der Grenzwert, i ein Interpolationsfaktor, k der Abstand zweier paralleler Sensorleitungen des Matrix-Touchscreens bzw. die reale Auflösung des Matrix-Touchscreens, $\Delta t$ das Abtastintervall, und $v_{\max}$ ein Geschwindigkeitsgrenzwert ist. Ein Abtastintervall ist der zeitliche Abstand zwischen zwei Abtastzeitpunkten. Ein Interpolationsfaktor im Sinne der Erfindung gibt insbesondere an, wie viele Zwischenschritte zwischen zwei Sensorlinien des Matrix-Touchscreens durch Interpolation zur Positionsbestimmung verwendet werden. Ist zum Beispiel vorgesehen, dass die Mitte zwischen zwei Sensorlinien als einziger Interpolationswert verwendet wird, um einer Berührung eine eigene Position zuzuordnen, so ist der Interpolationsfaktor 2. Erfolgt keine Interpolation, so ist der Interpolationsfaktor gleich 1, d. h. der Grenzwert wird vorteilhafterweise gemäß der Formel

$$D_{\max} = k \cdot \Delta t \cdot v_{\max}$$

bestimmt bzw. berechnet.

In weiterhin vorteilhafter Ausgestaltung der Erfindung ist der Geschwindigkeitsgrenzwert nicht größer als 0,25 m/s, wenn die Funktion das Verschieben eines grafischen Elementes auf einem Display ist. Ein grafisches Element im Sinne der Erfindung kann zum Beispiel ein Icon, ein virtuelles Bedienelement und/oder eine Karte bzw. ein Kartenausschnitt sein. In weiterhin vorteilhafter Ausgestaltung der Erfindung ist der Geschwindigkeitsgrenzwert 0,25 m/s, wenn die Funktion das Verschieben eines grafischen Elementes auf einem Display ist. In weiterhin vorteilhafter Ausgestaltung der Erfindung ist der Geschwindigkeitsgrenzwert nicht größer als 0,5 m/s, wenn die Funktion eine Handschrifteneingabe ist. In weiterhin vorteilhafter Ausgestaltung der Erfindung ist der Geschwindigkeitsgrenzwert 0,5 m/s, wenn die Funktion eine Handschrifteneingabe ist. In weiterhin vorteilhafter Ausgestaltung der Erfindung ist der Geschwindigkeitsgrenzwert nicht größer als 1 m/s, wenn die Funktion das Durchblättern bzw. Scrollen von auf einem Display angezeigten Listeneinträgen ist. In weiterhin vorteilhafter Ausgestaltung der Erfindung ist der Geschwindigkeitsgrenzwert 1 m/s, wenn die Funktion das Durchblättern bzw. Scrollen von auf einem Display angezeigten Listeneinträgen ist. In weiterhin vorteilhafter Ausgestaltung der Erfindung ist der Geschwindigkeitsgrenzwert, wenn die Funktion das Verschieben eines grafischen Elementes auf einem Display ist, kleiner, als wenn die Funktion eine Handschrifteneingabe ist. In weiterhin vorteilhafter Ausgestaltung der Erfindung ist der Geschwindigkeitsgrenzwert, wenn die Funktion das Verschieben eines grafischen Elementes auf einem Display ist, kleiner, als wenn die Funktion das Durchblättern bzw. Scrollen von auf einem Display angezeigten Listeneinträgen ist. In weiterhin vorteilhafter Ausgestaltung der Erfindung ist der Geschwindigkeitsgrenzwert, wenn die Funktion eine Handschrifteneingabe ist, kleiner, als wenn die Funktion das Durchblättern bzw. Scrollen von auf einem Display angezeigten Listeneinträgen ist. In weiterhin vorteilhafter Ausgestaltung der Erfindung ist der Geschwindigkeitsgrenzwert größer als 1 m/s, wenn die Funktion eine Wischbewegung ist.

In weiterhin vorteilhafter Ausgestaltung der Erfindung wird einer Berührung des Matrix-Touchscreens in einem Abtastzeitpunkt die Berührung des Matrix-Touchscreens in einem vorhergehenden Abtastzeitpunkt zugeordnet, die den geringsten Abstand von der Berührung des Matrix-Touchscreens in dem Abtastzeitpunkt ausweist. In weiterhin vorteilhafter Ausgestaltung der Erfindung wird jeder Berührung des Matrix-Touchscreens in einem Abtastzeitpunkt die Berührung des Matrix-Touchscreens in einem vorhergehenden Abtastzeitpunkt zugeordnet, die den geringsten Abstand von der Berührung des Matrix-Touchscreens in dem Abtastzeitpunkt ausweist. In weiterhin vorteilhafter Ausgestaltung der Erfindung werden, wenn einer Berührung des Matrix-Touchscreens in dem Abtastzeitpunkt mehr als eine Berührung des Matrix-Touchscreens in einem vorhergehenden Abtastzeitpunkt zugeordnet ist, alle Zuordnungen zwischen diesen Berührungen bis auf die Zuordnung mit dem kleinsten Abstand gelöscht.

Die Erfindung ist besonders geeignet für den Einsatz in Kraftfahrzeugen bzw. für Touchscreens, die in Kraftfahrzeugen zur Bedienung des Kraftfahrzeuges bzw. zur Bedienung von Funktionen des Kraftfahrzeuges vorgesehen sind. Durch die Erschütterung und den möglichst kurzen Blickkontakt auf den Touchscreen, wie es typisch ist für Situationen im Kraftfahrzeug, kommt es insbesondere zu ungenauen und/oder flächigen und/oder Mehrfachberührungen, die zu einer nicht unerheblichen Unschärfe der Eingabe führen. Die Erfindung ermöglicht es, eine bessere Identifizierung der gewünschten Berührung zu gewährleisten. Mittels der Erfindung lassen sich besonders geeignet Berührungen mittels eines Handballens sowie Berührungen zur Bedienung eines virtuellen Drehstellers auf einem Display erkennen. Auf diese Weise kann z.B. die Einstellung einer Empfangsfrequenz eines Radios, die Einstellung einer Lautstärke einer akustischen Ausgabe in einem Kraftfahrzeug, die Auswahl eines Zielortes oder eine Temperatureinstellung mittels eines virtuellen Drehstellers erfolgen. Es lassen sich insbesondere in besonders geeigneter Weise Funktionen eines Kraftfahrzeugs bedienen, die mittels eines virtuellen Drehstellers bedient werden sollen.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:

Fig. 1      ein Ausführungsbeispiel einer ausschnittsweisen Innenansicht eines Kraftfahrzeuges,
Fig. 2      eine Prinzipdarstellung des Kraftfahrzeuges gemäß Fig. 1,
Fig. 3      ein Ausführungsbeispiel einer Bedienvorrichtung,
Fig. 4      ein Ausführungsbeispiel eines Kontrastkorrekturmoduls,
Fig. 5      das Kontrastkorrekturmodul gemäß Fig. 4,
Fig. 6      eine beispielhafte Erläuterung der Funktions- bzw. Arbeitsweise eines Vertikalprojektionsmoduls und eines Horizontalprojektionsmoduls,
Fig. 7      ein Ausführungsbeispiel einer in einem Korrekturmodul implementierten Funktion
Fig. 8      eine beispielhafte Erläuterung der Funktions- bzw. Arbeitsweise eines Kontrastanpassungsmoduls,
Fig. 9      ein Ausführungsbeispiel für die Signalpegel eines Matrix-Touchscreens bei Auflegen eines Handballens auf den Matrix-Touchscreen,
Fig. 10     ein Ausführungsbeispiel für die Signalpegel gemäß Fig. 9 nach Kontrastanpassung mittels eines Kontrastanpassungsmoduls gemäß Fig. 8,
Fig. 11     ein Ausführungsbeispiel für die Signalpegel eines Matrix-Touchscreens bei Auflegen dreier Fingerspitzen auf den Matrix-Touchscreen,
Fig. 12     ein Ausführungsbeispiel für die Signalpegel gemäß Fig. 11 nach Kontrastanpassung mittels eines Kontrastanpassungsmoduls gemäß Fig. 8,
Fig. 13     ein Ausführungsbeispiel für die Signalpegel gemäß Fig. 12 nach Vervierfachung der Pixel durch Interpolation,

Fig. 14   ein Ausführungsbeispiel für die Signalpegel gemäß Fig. 13 nach erneuter Kontrastanpassung,

Fig. 15   ein Ausführungsbeispiel eines Verfahrens zur Bedienung des Kraftfahrzeuges,

Fig. 16   ein Ausführungsbeispiel für erkannte Berührungen eines Multitouchscreens zu einem Abtastzeitpunkt i - 1,

Fig. 17   ein Ausführungsbeispiel für erkannte Berührungen eines Multitouchscreens zu einem Abtastzeitpunkt i,

Fig. 18   ein Ausführungsbeispiel für erkannte Berührungen eines Multitouchscreens zu einem Abtastzeitpunkt i und zu einem Abtastzeitpunkt i - 1,

Fig. 19   ein Ausführungsbeispiel für erkannte Berührungen eines Multitouchscreens zu einem Abtastzeitpunkt i und zu einem Abtastzeitpunkt i - 1,

Fig. 20   ein Ausführungsbeispiel für eine Tabelle mit Benennungen von Abständen,

Fig. 21   ein Ausführungsbeispiel für Zuordnungen zwischen erkannten Berührungen eines Multitouchscreens zu einem Abtastzeitpunkt i und erkannten Berührungen eines Multitouchscreens zu einem Abtastzeitpunkt i - 1,

Fig. 22   ein weiteres Ausführungsbeispiel für Zuordnungen zwischen erkannten Berührungen eines Multitouchscreens zu einem Abtastzeitpunkt i und erkannten Berührungen eines Multitouchscreens zu einem Abtastzeitpunkt i - 1,

Fig. 23   ein weiteres Ausführungsbeispiel für Zuordnungen zwischen erkannten Berührungen eines Multitouchscreens zu einem Abtastzeitpunkt i und erkannten Berührungen eines Multitouchscreens zu einem Abtastzeitpunkt i - 1 und

Fig. 24   ein weiteres Ausführungsbeispiel für Zuordnungen zwischen erkannten Berührungen eines Multitouchscreens zu einem Abtastzeitpunkt i und erkannten Berührungen eines Multitouchscreens zu einem Abtastzeitpunkt i - 1 und

Fig. 25   ein Ausführungsbeispiel für einen virtuellen Drehsteller.

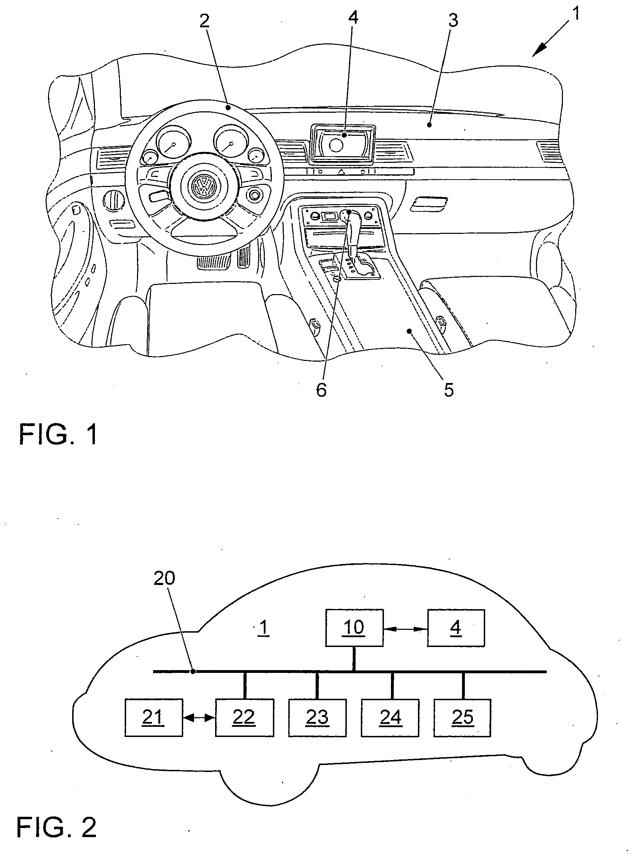

Fig. 1 zeigt ein Ausführungsbeispiel einer ausschnittsweisen Innenansicht eines Kraftfahrzeuges 1, das in Fig. 2 in einer Prinzipdarstellung dargestellt ist. Dabei umfasst das Kraftfahrzeug 1 eine neben dem Lenkrad 2 am Armaturenbrett 3 angeordnete Bedienvorrichtung 4. Mittels der Bedienvorrichtung 4 sind ein Navigationssystem 23 sowie zum Beispiel eine Klimaautomatik 24, ein Infotainmentsystem 25 und - über eine Mobiltelefon-Schnittstelle 22 - ein Mobiltelefon 21 bedienbar. Dazu ist die Bedienvorrichtung 4 mit einem Anzeigesteuergerät 10 gekoppelt, das über ein Bussystem mit der Telefonschnittstelle 22, mit dem Navigationssystem 23, mit der Klimaautomatik 24 und mit dem Infotainmentsystem 25 verbunden ist.

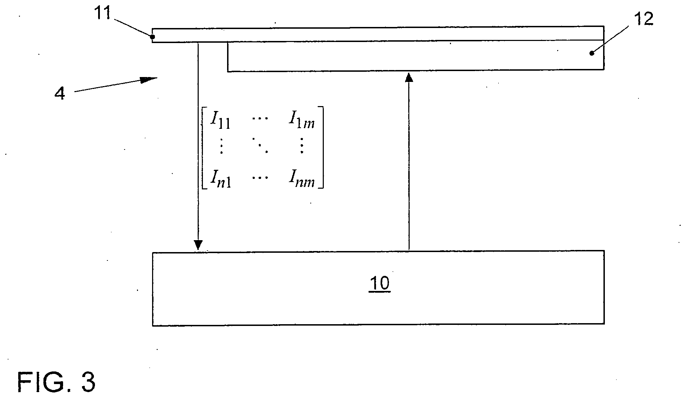

Die Bedienvorrichtung 4 umfasst - wie in Fig. 3 dargestellt - ein Display 12 zur Darstellung veränderlicher Informationen und einen über dem Display 12 angeordneten transparenten Matrix-Touchscreen 11. Es kann (alternativ oder zusätzlich) auch vorgesehen sein, dass der Matrix-Touchscreen 11 räumlich getrennt von dem Display 12 angeordnet ist. So kann der Matrix-Touchscreen 11 zum Beispiel im Bereich der Mittelkonsole 5 des Kraftfahrzeuges 1 angeordnet sein. Alternativ oder zusätzlich kann der Matrix Touchscreen 11 auch im Bereich eines Schaltknaufs 6 des Kraftfahrzeuges 1 angeordnet sein.

Der Matrix-Touchscreen 11 umfasst eine matrixförmige Struktur leitfähiger Leitungen/Flächen mit Spalten und Zeilen. Diese Struktur kann beispielsweise aus ITO-Flächen oder Feindrähten bestehen bzw. solche umfassen.

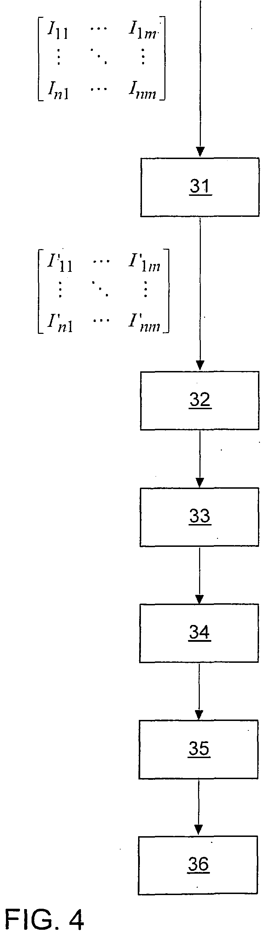

Fig. 4 zeigt ein in dem Anzeigesteuergerät 10 implementiertes Verfahren zur Verarbeitung des Ausgangswertes

$$\begin{bmatrix} I_{11} & \cdots & I_{1m} \\ \vdots & \ddots & \vdots \\ I_{n1} & \cdots & I_{nm} \end{bmatrix}$$

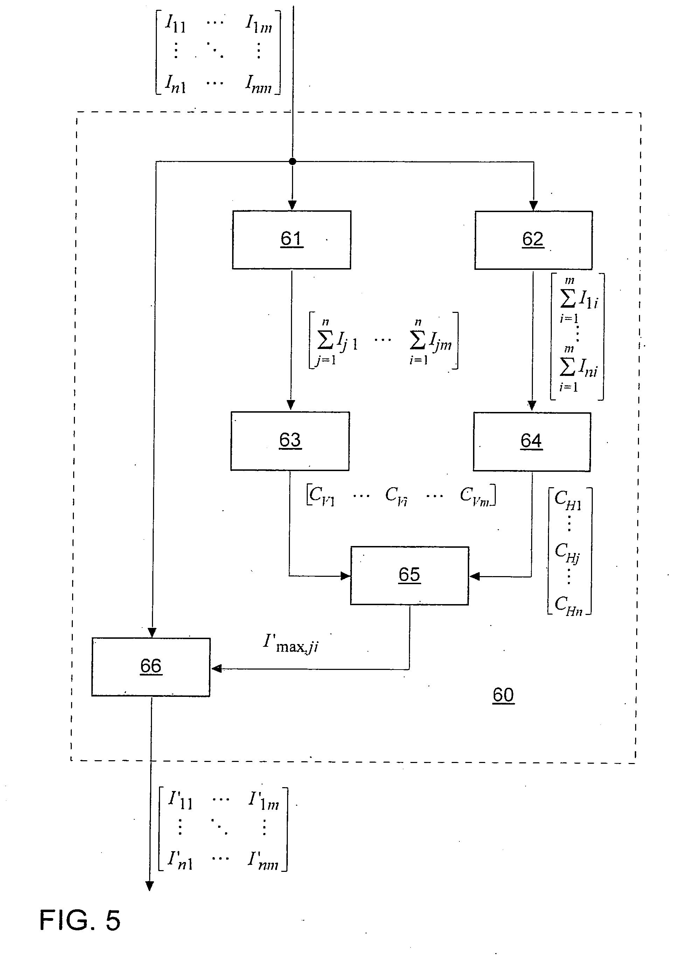

des Matrix-Touchscreens 11. Das Verfahren beginnt mit einem Schritt 31 zur Kontrastanpassung. Dazu umfasst das Anzeigesteuergerät 10 - wie in Fig. 5 dargestellt - ein Kontrastkorrekturmodul 60. Dabei bezeichnen die Werte $I_{ji}$ die Signalpegel der entsprechenden Matrixelemente bzw. Pixel in der j-ten Zeile und der i-ten Spalte. Das Kontrastkorrekturmodul 60 umfasst ein Vertikalprojektionsmodul 61 und ein Horizontalprojektionsmodul 62 zur Ermittlung einer so genannten vertikalen Projektion, das heißt

$$\begin{bmatrix} \sum_{j=1}^{n} I_{j1} & \cdots & \sum_{i=1}^{n} I_{jm} \end{bmatrix}$$

bzw. einer horizontalen Projektion, das heißt

$$\begin{bmatrix} \sum_{i=1}^{m} I_{1i} \\ \vdots \\ \sum_{i=1}^{m} I_{ni} \end{bmatrix}.$$

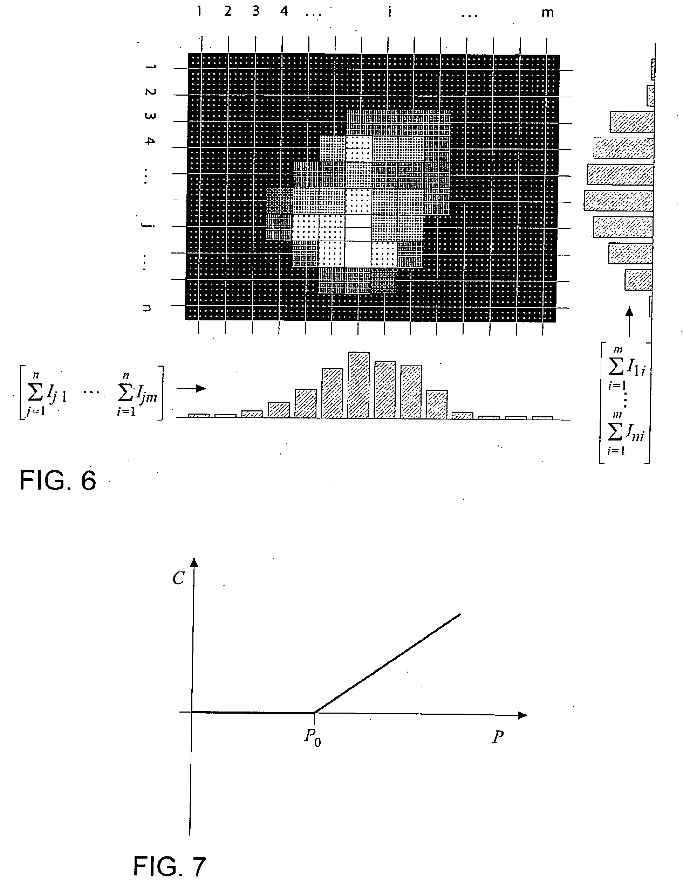

Die Arbeitsweise des Vertikalprojektionsmoduls 61 und des Horizontalprojektionsmoduls 62 ist beispielhaft in Fig. 6 dargestellt, wobei die Signalpegel $I_{ji}$ durch Graustufen derart symbolisiert sind, dass helle Töne einen hohen Signalpegel $I_{ji}$ und schwarze Töne bzw. dunkle Grautöne einen niedrigen Signalpegel $I_{ji}$ symbolisieren.

Das Kontrastkorrekturmodul 60 umfasst zudem Korrekturmodule 63 und 64, mittels derer die Elemente der Matrix

$$\begin{bmatrix} \sum_{j=1}^{n} I_{j1} & \cdots & \sum_{i=1}^{n} I_{jm} \end{bmatrix}$$

in Elemente der Matrix

$$\begin{bmatrix} C_{V1} & \cdots & C_{Vi} & \cdots & C_{Vm} \end{bmatrix}$$

und die Elemente der Matrix

$$\begin{bmatrix} \sum_{i=1}^{m} I_{1i} \\ \vdots \\ \sum_{i=1}^{m} I_{ni} \end{bmatrix}$$

in Elemente der Matrix

$$\begin{bmatrix} C_{H1} \\ \vdots \\ C_{Hj} \\ \vdots \\ C_{Hn} \end{bmatrix}$$

entsprechend der in Fig. 7 dargestellten Funktion umgewandelt werden. Dabei bezeichnet C die Elemente der Matrix

$$\begin{bmatrix} C_{V1} & \cdots & C_{Vi} & \cdots & C_{Vm} \end{bmatrix}$$

und der Matrix

$$\begin{bmatrix} C_{H1} \\ \vdots \\ C_{Hj} \\ \vdots \\ C_{Hn} \end{bmatrix}$$

und P die Elemente der Matrix

$$\begin{bmatrix} \sum_{j=1}^{n} I_{j1} & \cdots & \sum_{i=1}^{n} I_{jm} \end{bmatrix}$$

und der Matrix

$$\begin{bmatrix} \sum_{i=1}^{m} I_{1i} \\ \vdots \\ \sum_{i=1}^{m} I_{ni} \end{bmatrix}$$

Entsprechend der in Fig. 7 dargestellten Funktion wird zum Beispiel $C_{V1}$ wie folgt ermittelt:

$$C_{V1} = \begin{cases} m \cdot \left( \left( \sum_{j=1}^{n} I_{j1} \right) - P_0 \right) & f\ddot{u}r \left( \sum_{j=1}^{n} I_{j1} \right) > P_0 \\ 0 & f\ddot{u}r \left( \sum_{j=1}^{n} I_{j1} \right) \leq P_0 \end{cases}$$

wobei m eine Geradensteigung und $P_0$ ein Eingriffsoffset ist.
Die Matrix

$$\begin{bmatrix} C_{V1} & \cdots & C_{Vi} & \cdots & C_{Vm} \end{bmatrix}$$

und die Matrix

$$\begin{bmatrix} C_{H1} \\ \vdots \\ C_{Hj} \\ \vdots \\ C_{Hn} \end{bmatrix}$$

sind Eingangsgrößen in ein Grenzwertbestimmungsmodul 65 zur Bestimmung eines oberen Signalpegelgrenzwertes

$I'_{\max,ji}$, wobei $I'_{\max,ji}$ - unter der Nebenbedingung, dass er größer ist als ein unterer Signalpegelgrenzwert $I_{\min}$ - wie folgt bestimmt wird:

$$I'_{\max,ji} = I_{\max} - C_{Vi} - C_{Hj} - a \cdot C_{Vi} \cdot C_{Hj}$$

wobei a eine Konstante ist, und wobei $I_{\max}$ eine Konstante, insbesondere in der Größe einer üblichen Kontrastanpassung ist.

$I'_{\max,ji}$ ist Eingangsgröße in ein Kontrastanpassungsmodul 66, mittels dessen die Signalpegel

$$\begin{bmatrix} I_{11} & \cdots & I_{1m} \\ \vdots & \ddots & \vdots \\ I_{n1} & \cdots & I_{nm} \end{bmatrix}$$

entsprechend des in Fig. 8 dargestellten Algorithmus wie folgt in korrigierte Signalpegel

$$\begin{bmatrix} I'_{11} & \cdots & I'_{1m} \\ \vdots & \ddots & \vdots \\ I'_{n1} & \cdots & I'_{nm} \end{bmatrix}$$

umgewandelt werden: Signalpegel $I_{ji}$, die größer sind als der obere Signalpegelgrenzwert $I'_{\max,ji}$, werden auf einen maximal möglichen Signalpegel MAX gesetzt. Signalpegel, die kleiner sind als ein unterer Signalpegelgrenzwert $I_{\min}$, werden auf einen Minimalwert MIN, insbesondere null, gesetzt. Signalpegel $I_{ji}$, die größer sind als der untere Signalpegelgrenzwert $I_{\min}$ und kleiner sind als der obere Signalpegelgrenzwert $I'_{\max,ji}$, werden entsprechend ihrer Höhe auf einen Wert zwischen MAX und MIN skaliert, wobei der grob schraffierte Bereich in Fig. 8 auf den fein schraffierten Bereich abgebildet wird.

Die Funktionsweise bzw. Wirkung des Kontrastkorrekturmoduls 60 veranschaulichen - in Form eines Graustufenbildes - Fig. 9 und Fig. 10 am Beispiel eines Handballens, der auf den Matrix-Touchscreen11 aufgelegt wird. Dabei zeigt Fig. 9

$$\begin{bmatrix} I_{11} & \cdots & I_{1m} \\ \vdots & \ddots & \vdots \\ I_{n1} & \cdots & I_{nm} \end{bmatrix}$$

in Form eines Graustufenbildes und Fig. 10

$$\begin{bmatrix} I'_{11} & \cdots & I'_{1m} \\ \vdots & \ddots & \vdots \\ I'_{n1} & \cdots & I'_{nm} \end{bmatrix}$$

in Form eines Graustufenbildes. Wird auf die Oberfläche des Matrix-Touchscreens 11 ein Handballen abgelegt, so ist dieser zwar als solcher erkennbar, die einzelnen Matrixelemente bzw. Pixel übermitteln jedoch sehr geringe Signalpegel. Darüber hinaus wird in der Mitte der Berührfläche ein Signaleinbruch angezeigt, der nicht mit einer schwächeren Berührung des Matrix-Touchscreens 11 korrespondiert. Nach der erfindungsgemäßen Kontrastanpassung, ist der Handballen, wie Fig. 10 zeigt, deutlich besser zu erkennen.

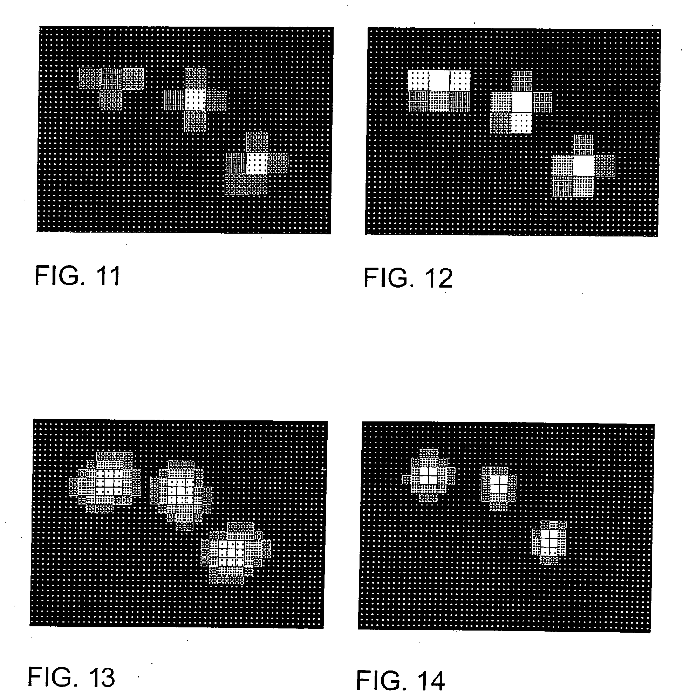

Dem Schritt 31 folgt ein optionaler Interpolationsschritt 32, in dem z.B. mittels Interpolation aus einem Matrixelement vier Pseudo-Matrixelemente generiert werden. Dem Interpolationsschritt 32 folgt optional ein Schritt 33 mit einer weiteren Kontrastanpassung, die auf herkömmliche Weise oder entsprechend dem in Bezug auf Schritt 31 beschriebenen Verfahren erfolgen kann. Fig. 11, Fig. 12, Fig. 13 und Fig. 14 veranschaulichen die Wirkungsweise der Schritte 31 bis 33 anhand einer Berührung des Multi-Touchscreens 11 mittels dreier Fingerspitzen, wobei Fig. 11 das Eingangssignal

$$\begin{bmatrix} I_{11} & \cdots & I_{1m} \\ \vdots & \ddots & \vdots \\ I_{n1} & \cdots & I_{nm} \end{bmatrix}$$

in Form eines Graustufenbildes zeigt. Fig. 12 zeigt - in Form eines Graustufenbildes - die angepassten Signalpegel

$$\begin{bmatrix} I'_{11} & \cdots & I'_{1m} \\ \vdots & \ddots & \vdots \\ I'_{n1} & \cdots & I'_{nm} \end{bmatrix}$$

nach Ausführung des Schritts 31. Fig. 13 zeigt - in Form eines Graustufenbildes - die Signalpegel nach dem Interpolationsschritt 32 und Fig. 14 zeigt - in Form eines Graustufenbildes - die Signalpegel nach erneuter Kontrastanpassung gemäß Schritt 33.

Wie deutlich zu erkennen ist, ermöglichen es die Schritte 31, 32 und 33 zusammenhängende Gebiete wie z.B. die Berührungen, die jeweils einem Finger bzw. einer Fingerspitze zugeordnet sind, zu erkennen. Diese Erkennung zusammenhängender Gebiete erfolgt in einem Schritt 34 unter Verwendung des in dem Artikel "A Linear-Time Component-Labeling Algorithm Using Contour Tracing Technique", Fu Chang, Chun-Jen Chen, and Chi-Jen Lu, Institute of Information Science, Academia Sinica, 128 Academia Road, Section 2, Nankang, Taipei 115 Taiwan, www.iis.sinica.edu.tw/~fchang/paper/component_labeling_cviu.pdf offenbarten Algorithmus, wobei zuvor Signalpegel einer ersten Größe zugeteilt werden, wenn sie oberhalb eines bestimmten Grenzwertes liegen, und einer zweiten Größe zugeteilt werden, wenn sie nicht oberhalb dieses Grenzwertes liegen. Die auf diese Weise auf binäre Signale reduzierten Signalpegel werden dann mittels des vorgenannten Algorithmus verarbeitet, wobei jedoch lediglich von einer Vieremachbarschaft ausgegangen wird.

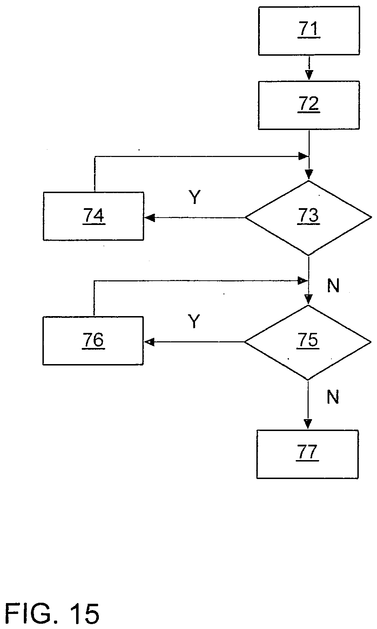

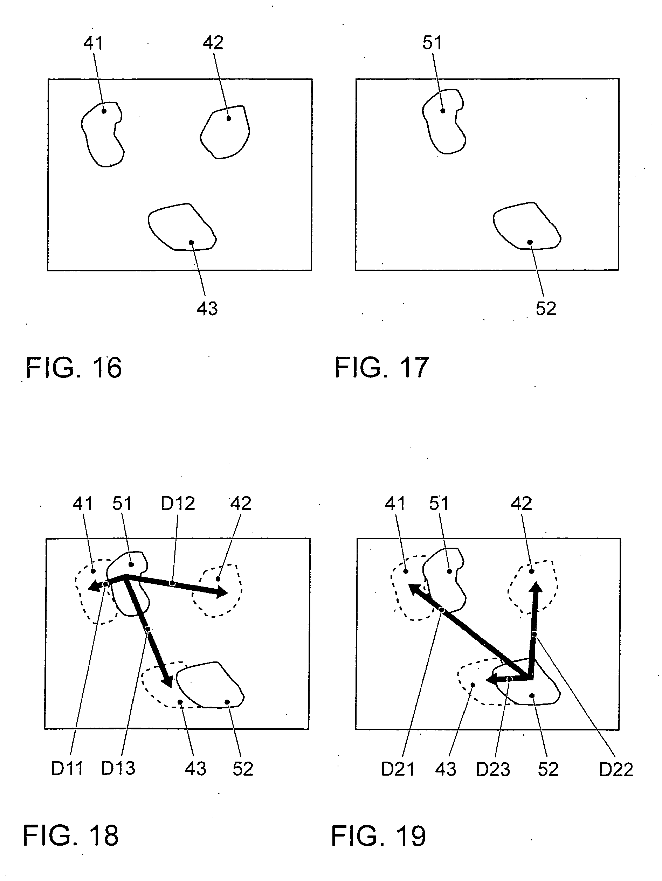

Dem Schritt 34 folgt ein sogenannter Tracking-Schritt 35, mittels dessen anhand von Berührungen zu verschiedenen Abtastschritten zusammenhängende Bewegungen erkannt werden. Fig. 15 zeigt ein Verfahren zur Implementierung dieses Tracking-Schrittes 35. Fig. 16 und Fig. 17 zeigen Ausführungsbeispiele für erkannte Berührungen, wobei Fig. 16 die erkannten Berührungen 41, 42, 43 des Matrix-Touchscreens 11 zu einem Abtastzeitpunkt i - 1 und Fig. 17 die erkannten Berührungen 51 und 52 des Matrix-Touchscreens 11 zu einem Abtastzeitpunkt i zeigt.

Das unter Bezugnahme auf Fig. 15 beschriebene Verfahren beginnt mit einem Schritt 71, in dem die Abstände der Berührungen 51 und 52 des Matrix-Touchscreens 11 im Abtastzeitpunkt i zu den Berührungen 41, 42, 43 des Matrix-Touchscreens 11 in dem vorhergehenden Abtastzeitpunkt i - 1 ermittelt werden, wie dies beispielhaft in Fig. 18 und Fig. 19 dargestellt ist. Dabei zeigen Fig. 18 und Fig. 19 die Berührungen 51 und 52 des Matrix-Touchscreens 11 zum Abtastzeitpunkt i. Die nicht mehr präsenten Berührungen 41, 42, 43 des Matrix-Touchscreens 11 zum Abtastzeitpunkt i - 1 sind dagegen lediglich gestrichelt dargestellt. D11 bezeichnet den Abstand zwischen der Berührung 51 des Matrix-Touchscreens 11 zum Abtastzeitpunkt i zur Berührung 41 des Matrix-Touchscreens 11 zum Abtastzeitpunkt i - 1, D12 bezeichnet den Abstand zwischen der Berührung 51 des Matrix-Touchscreens 11 zum Abtastzeitpunkt i zur Berührung 42 des Matrix-Touchscreens 11 zum Abtastzeitpunkt i - 1, D13 bezeichnet den Abstand zwischen der Berührung 51 des Matrix-Touchscreens 11 zum Abtastzeitpunkt i zur Berührung 43 des Matrix-Touchscreens 11 zum Abtastzeitpunkt i - 1, D21 bezeichnet den Abstand zwischen der Berührung 52 des Matrix-Touchscreens 11 zum Abtastzeitpunkt i zur Berührung 41 des Matrix-Touchscreens 11 zum Abtastzeitpunkt i - 1, D22 bezeichnet den Abstand zwischen der Berührung 52 des Matrix-Touchscreens 11 zum Abtastzeitpunkt i zur Berührung 42 des Matrix-Touchscreens 11 zum Abtastzeitpunkt i - 1, und D23 bezeichnet den Abstand zwischen der Berührung 52 des Matrix-Touchscreens 11 zum Abtastzeitpunkt i zur Berührung 43 des Matrix-Touchscreens 11 zum Abtastzeitpunkt i - 1.

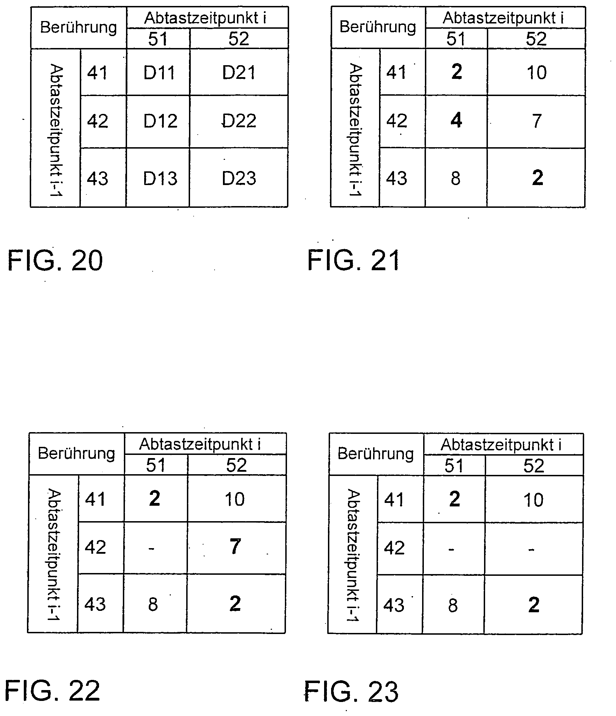

Fig. 20 zeigt eine Tabelle mit den entsprechenden Benennungen der Abstände D11, D12, D21, D22 und D23. Fig. 21 zeigt diese Tabelle mit beispielhaften Werten. Dabei ist D11 = 2, D12 = 4, D13 = 8, D21 = 10, D22 = 7 und D23 = 2. Zur Vereinfachung wurden dimensionslose Größen für die Abstände gewählt.

Dem Schritt 71 folgt ein Schritt 72, in dem jeder Berührung 51, 52 des Matrix-Touchscreens 11 des Abtastzeitpunkts i die Berührung 41, 42, 43 des Matrix-Touchscreens 11 in dem vorhergehenden Abtastzeitpunkt i - 1 zugeordnet wird, die den geringsten Abstand D11, D12, D23 von der Berührung 51, 52 des Matrix-Touchscreens 11 in dem Abtastzeitpunkt i aufweist. Die Zuordnungen sind in Fig. 21 durch die vergrößerte Darstellung und den Fettdruck der entsprechenden Zahlen markiert. Die minimalen Abstände, die gefunden wurden, sind somit die Abstände D11, D12 und D23.

Dem Schritt 72 folgt eine Abfrage 73, ob, wie zum Beispiel in Fig. 21 beispielhaft dargestellt, einer Berührung 51 des Matrix-Touchscreens 11 im Abtastzeitpunkt i mehr als eine Berührung 41, 42 des Matrix-Touchscreens 11 in dem vorhergehenden Abtastzeitpunkt i - 1 zugeordnet ist. Ist einer Berührung 51 des Matrix-Touchscreens 11 im Abtastzeitpunkt i mehr als eine Berührung 41, 42 des Matrix-Touchscreens 11 in dem vorhergehenden Abtastzeitpunkt i - 1 zugeordnet, so werden alle Zuordnungen zwischen den Berührungen 51, 41, 42 bis auf die Zuordnung mit dem kleinsten Abstand D11 gelöscht. In dem in Fig. 21 dargestellten Beispiel bedeutet dies, dass der Berührung 51 des Matrix-Touchscreens 11 zum Abtastzeitpunkt i sowohl die Berührung 41 des Matrix-Touchscreens 11 zum vorhergehenden Abtastzeitpunkt i - 1 als auch die Berührung 42 des Matrix-Touchscreens 11 zum vorhergehenden Abtastzeitpunkt i - 1 zugeordnet sind.

Da der Abstand D12 mit dem Wert 4 größer ist als der Abstand D11 mit dem Wert 2, wird die Zuordnung zwischen Berührung 51 des Matrix-Touchscreens 11 zum Abtastzeitpunkt i und der Berührung 42 des Matrix-Touchscreens 11 zum Abtastzeitpunkt i - 1 in einem Schritt 74 gelöscht. Das Ergebnis dieser Löschung zeigt beispielhaft Fig. 22, in dem der Wert 4 aus der Tabelle entfernt worden ist. Wie Fig. 22 zeigt, ist durch das Löschen der Zuordnung zwischen der Berührung 51 des Matrix-Touchscreens 11 zum Abtastzeitpunkt i und der Berührung 42 des Matrix-Touchscreens 11 zum Abtastzeitpunkt i - 1 jedoch eine Zuordnung zwischen der Berührung 52 des Matrix-Touchscreens 11 zum Abtastzeitpunkt i und der Berührung 42 des Matrix-Touchscreens 11 zum Abtastzeitpunkt i - 1 entstanden. Daher wird in dem vorliegenden Ausführungsbeispiel die Schleife aus Abfrage 73 und Schritt 74 nochmals durchlaufen, wobei der Wert 7, also die Zuordnung zwischen der Berührung 52 des Matrix-Touchscreens 11 zum Abtastzeitpunkt i und der Berührung 42 des Matrix-Touchscreens 11 zum Abtastzeitpunkt i - 1 gelöscht wird, da der Abstand D22 mit dem Wert 7 größer ist als der Abstand D23 mit dem Wert 2.

Ist einer Berührung des Matrix-Touchscreens 11 im Abtastzeitpunkt i nicht mehr als eine Berührung des Matrix-Touchscreens 11 in den vorhergehenden Abtastzeitpunkt i - 1 zugeordnet, so folgt der Abfrage 73 eine Abfrage 75, ob ein Abstand D11, D12, D13, D21, D22, D23 größer ist als ein Grenzwert $D_{max}$ mit

$$D_{\max} = i \cdot k \cdot \Delta t \cdot v_{\max},$$

wobei $D_{max}$ der Grenzwert, i ein Interpolationsfaktor, k der Abstand zweier paralleler Sensorleitungen des Matrix-Touchscreens 11 bzw. die reale Auflösung des Matrix-Touchscreens 11, $\Delta t$ das Abtastintervall, und $v_{max}$ ein Geschwindigkeitsgrenzwert ist. Der Geschwindigkeitsgrenzwert ist

- nicht größer als 0,25 m/s, wenn die Funktion das Verschieben eines grafischen Elementes auf einem Display ist,
- nicht größer als 0,5 m/s, wenn die Funktion eine Handschrifteneingabe ist und
- nicht größer als 1 m/s, wenn die Funktion das Durchblättern bzw. Scrollen von auf einem Display angezeigten Listeneinträgen ist.

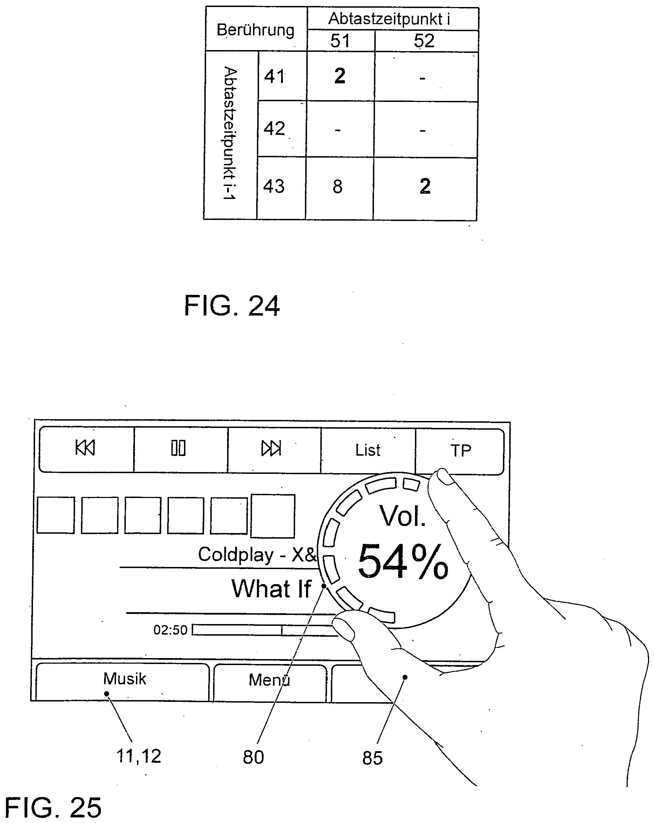

Gibt es einen Abstand zwischen zwei Berührungen, der größer ist als der Grenzwert $D_{max}$, so wird die diesem Abstand entsprechende Zuordnung in einem Schritt 76 gelöscht. In dem vorliegenden Beispiel beträgt der Grenzwert $D_{max}$ zum Beispiel 9. Daher würde, wie dies beispielhaft in Fig. 24 angedeutet ist, eine mögliche Zuordnung zwischen der Berührung 52 und der Berührung 41 gelöscht werden.

Gibt es keine Zuordnung, die auf einem Abstand beruht, der größer ist als der Grenzwert $D_{max}$, so folgt der Abfrage 75 ein Schritt 77, in die die einander zugeordneten Berührungen ein und derselben berührenden Bewegung über den Matrix-Touchscreen 11, also einer Trajektorie, zugeordnet werden. In dem Beispiel gemäß Fig. 21, Fig. 22, Fig. 23 und Fig. 24 sind dies, wie Fig. 24 zeigt, die Zuordnungen zwischen den Berührungen 51 und 41 und die Zuordnungen zwischen den Berührungen 52 und 43. Das heißt, die Berührung 51 und die Berührung 41 werden ein und derselben berührenden Bewegung über den Matrix-Touchscreen 11 zugeordnet. Ebenso werden die Berührungen 52 und 43 ein und derselben berührenden Bewegung über den Matrix-Touchscreen 11 zugeordnet. Das System erkennt somit zwei berührende Bewegungen über den Matrix-Touchscreen 11.

Entweder Schritt 34 oder Schritt 35 folgt ein Schritt 36, in dem die erkannte flächige Berührung bzw. die bewegende Berührung klassifiziert wird. Auf diese Weise können insbesondere Berührungen durch Fingerspitzen von Handballen und Bedienung eines virtuellen Drehstellers besonders geeignet erkannt werden. Fig. 25 zeigt in dem Ausführungsbeispiel für einen derartigen virtuellen Drehsteller 80, der mittels des Displays 12 dargestellt und mittels des Multi-Touchscreens 11 bedient werden kann. Dabei bezeichnet Bezugszeichen 85 die Hand eines Bedieners, der mittels zweier Finger eine drehende Bewegung über den Multi-Touchscreen 11 ausführt, die mittels des beschriebenen Verfahrens als Bedienung des Drehstellers 80 interpretiert werden kann, und in dem beschriebenen Ausführungsbeispiel zu einer entsprechenden Anpassung der Lautstärke eines Audiosignals führt.

In Anzeigesteuergerät 10 können mehrere Prozessoren implementiert sein, die jeweils, das in Fig. 4 beschriebene Verfahren parallel jeweils für eine bestimmte Anzahl von Matrixelementen ausführen.

**Patentansprüche**

1. Verfahren zum Betrieb eines Kraftfahrzeuges mit einem, insbesondere kapazitiven, Matrix-Touchscreen, wobei bei Berührung des Matrix-Touchscreens im Bereich eines Matrixelementes ein dem Matrixelement zugeordneter Signalpegel erzeugt wird, **dadurch gekennzeichnet, dass** der bei Berührung des Matrix-Touchscreens im Bereich des Matrixelementes erzeugte dem Matrixelement zugeordnete Signalpegel derart abgewandelt wird, dass der Signalpegel,

   - wenn dieser Signalpegel einen oberen Signalpegelgrenzwert überschreitet, insbesondere auf einen maximalen Signalpegel, erhöht wird,
   - wenn dieser Signalpegel einen unteren Signalpegelgrenzwert unterschreitet, insbesondere auf einen minimalen Signalpegel, verringert wird, und
   - wenn dieser Signalpegel den oberen Signalpegelgrenzwert unterschreitet aber einen unteren Signalpegelgrenzwert überschreitet, skaliert wird,

   wobei in Abhängigkeit der abgewandelten Signalpegel zweier benachbarter Matrixelemente bestimmt wird, dass die beiden Matrixelemente im Rahmen einer gemeinsamen flächigen Berührung des Matrix-Touchscreens berührt werden, und wobei der obere Signalpegelgrenzwert für ein Matrixelement in Abhängigkeit der Summe der Signalpegel aller Matrixelemente der Zeile des Matrixelementes und der Summe der Signalpegel aller Matrixelemente der Spalte des Matrixelementes bestimmt wird.

2. Verfahren nach Anspruch 1, **dadurch gekennzeichnet, dass** in Abhängigkeit der abgewandelten Signalpegel eines Matrixelementes und vier diesem Matrixelement benachbarter Matrixelemente bestimmt wird, dass das Matrixelement und die benachbarten Matrixelemente im Rahmen einer gemeinsamen flächigen Berührung des Matrix-Touchscreens berührt werden.

**Claims**

1. Method for operating a motor vehicle having an, in particular capacitive, matrix touch screen, wherein touching the matrix touch screen in the region of a matrix element prompts a signal level associated with the matrix element to be produced, **characterized in that** the signal level associated with the matrix element which is produced when the matrix touch screen is touched in the region of the matrix element is modified such that the signal level

   - is increased when this signal level exceeds an upper signal level limit value, in particular at a maximum signal level,
   - is decreased when this signal level is below a lower signal level limit value, particularly at a minimum signal level, and
   - is scaled when this signal level is below the upper signal level limit value but exceeds a lower signal level limit value,

   wherein the modified signal levels of two adjacent matrix elements are taken as a basis for determining that the two matrix elements are being touched as part of a joint two-dimensional touch of the matrix touch screen, and wherein the upper signal level limit value for a matrix element is determined on the basis of the sum of the signal levels of all matrix elements in the row of the matrix element and the sum of the signal levels of all matrix elements in the column of the matrix element.

2. Method according to Claim 1, **characterized in that** the modified signal levels of a matrix element and of four matrix elements adjacent to this matrix element are taken as a basis for determining that the matrix element and the adjacent matrix elements are being touched as part of a joint two-dimensional touch of the matrix touch screen.

**Revendications**

1. Procédé pour le fonctionnement d'un véhicule automobile comportant un écran tactile matriciel, notamment capacitif, dans lequel, lorsque l'écran tactile matriciel est touché dans la zone d'un élément de matrice, un niveau de signal associé à l'élément de matrice est généré, **caractérisé en ce que** le niveau de signal associé à l'élément de matrice généré lorsque l'écran tactile matriciel est touché dans la zone de l'élément de matrice, est convertit de manière à ce que le niveau de signal

- soit augmenté lorsque ledit niveau de signal dépasse une limite de niveau de signal supérieure, notamment à un niveau de signal maximal,
- soit réduit lorsque ledit niveau de signal s'abaisse en dessous d'une limite de niveau de signal inférieure, notamment à un niveau de signal minimal, et
- soit mis à l'échelle lorsque ledit niveau de signal s'abaisse en-dessous de la limite de niveau de signal supérieure mais dépasse une limite de niveau de signal inférieure,

dans lequel il est déterminé, en fonction du niveau de signal converti de deux éléments de matrice adjacents que les deux éléments de matrice sont touchés dans le cadre d'un contact bidimensionnel commun, et dans lequel la limite de niveau de signal supérieure est déterminée pour un élément de matrice en fonction de la somme du niveau de signal de tous les éléments de matrice de la ligne de l'élément de matrice et de la somme du niveau de signal de tous les éléments de matrice de la colonne de l'élément de matrice.

2. Procédé selon la revendication 1, **caractérisé en ce qu'**il est déterminé, en fonction du niveau de signal converti d'un élément de matrice et de quatre éléments de matrice adjacents audit élément de matrice, que l'élément de matrice et les éléments de matrice adjacents sont touchés dans le cadre d'un contact bidimensionnel commun de l'écran tactile matriciel.

FIG. 1

FIG. 2

11

12

4

$$\begin{bmatrix} I_{11} & \cdots & I_{1m} \\ \vdots & \ddots & \vdots \\ I_{n1} & \cdots & I_{nm} \end{bmatrix}$$

<u>10</u>

FIG. 3

$$\begin{bmatrix} I_{11} & \cdots & I_{1m} \\ \vdots & \ddots & \vdots \\ I_{n1} & \cdots & I_{nm} \end{bmatrix}$$

**31**

$$\begin{bmatrix} I'_{11} & \cdots & I'_{1m} \\ \vdots & \ddots & \vdots \\ I'_{n1} & \cdots & I'_{nm} \end{bmatrix}$$

**32**

**33**

**34**

**35**

**36**

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

| Berührung | | Abtastzeitpunkt i | |
|---|---|---|---|
| | | 51 | 52 |
| Abtastzeitpunkt i-1 | 41 | D11 | D21 |
| | 42 | D12 | D22 |
| | 43 | D13 | D23 |

FIG. 20

| Berührung | | Abtastzeitpunkt i | |
|---|---|---|---|
| | | 51 | 52 |
| Abtastzeitpunkt i-1 | 41 | 2 | 10 |
| | 42 | 4 | 7 |
| | 43 | 8 | 2 |

FIG. 21

| Berührung | | Abtastzeitpunkt i | |
|---|---|---|---|
| | | 51 | 52 |
| Abtastzeitpunkt i-1 | 41 | 2 | 10 |
| | 42 | - | 7 |
| | 43 | 8 | 2 |

FIG. 22

| Berührung | | Abtastzeitpunkt i | |
|---|---|---|---|
| | | 51 | 52 |
| Abtastzeitpunkt i-1 | 41 | 2 | 10 |
| | 42 | - | - |
| | 43 | 8 | 2 |

FIG. 23

| Berührung | | Abtastzeitpunkt i | |
|---|---|---|---|
| | | 51 | 52 |
| Abtastzeitpunkt i-1 | 41 | 2 | - |
| | 42 | - | - |
| | 43 | 8 | 2 |

## FIG. 24

Coldplay - X&

What If

Vol. **54%**

02:50

Musik   Menü

List   TP

11,12   80   85

## FIG. 25

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20102197 U1
- DE 60220933 T2
- US 20060161871 A1
- EP 1517228 A2
- US 11928629 B
- US 7348991 B1
- US 6606420 B1
- WO 2009154596 A1
- WO 2005114369 A2
- WO 2009007704 A1
- US 20090284495 A1
- US 20080309629 A1
- US 20080158145 A1
- US 20090095540 A1

**In der Beschreibung aufgeführte Nicht-Patentliteratur**

- **FU CHANG ; CHUN-JEN CHEN ; CHI-JEN LU.** A Linear-Time Component-Labeling Algorithm Using Contour Tracing Technique. Institute of Information Science
- **FU CHANG ; CHUN-JEN CHEN ; CHI-JEN LU.** A Linear-Time Component-Labeling Algorithm Using Contour Tracing Technique. Institute of Information Science, Academia Sinica, 128 Academia Road